# EUROPEAN PATENT SPECIFICATION

(11) **EP 2 578 435 B1**
(45) Date of publication and mention of the grant of the patent: **29.04.2015**
(21) Application number: 11184032.8
(22) Date of filing: 05.10.2011
(51) Int. Cl.: B60L 7/16, B60L 9/22, B60L 3/00

(54) **Method and device for braking track-bound vehicles driven by induction motors.**
Verfahren und Vorrichtung zum Abbremsen schienengebundener, von Induktionsmotoren angetriebenen Fahrzeugen
Procédé et dispositif pour freiner des véhicules reliés à des rails entraînés par des moteurs à induction

(43) Date of publication of application: 10.04.2013
(73) Proprietor: Bombardier Transportation GmbH, 10785 Berlin (DE)
(72) Inventor: Place, Colin, Beeston, Nottinghamshire NG9 1BA (GB); Rossing, Anders, 72334 Vasteras (SE); Tonge, Martin, Glossop, Derbyshire SK13 2BL (GB); Wilson, James, Belper, Derbyshire DE56 4GE (GB); Barber, James, Chellaston, Derbyshire DE73 6QA (GB); Plamper, Stefan, 13467 Berlin (DE)
(74) Representative: Broydé, Marc

(56) References cited:
- EP-A2- 0 787 620
- EP-A2- 1 129 888
- DE-A1- 19 510 755
- US-A1- 2009 224 706

## Description

### TECHNICAL FIELD OF THE INVENTION

This invention relates to track-bound vehicles driven by induction motors and powered by an overhead line or a third rail. It relates in particular, albeit not exclusively, to multiple unit rail vehicles comprising a plurality of coaches and driven by induction motors distributed over the length of the vehicle. It relates more specifically to a braking system, in particular an emergency braking system, suitable for such a vehicle, and to a corresponding braking method.

### BACKGROUND ART

Conventionally, rail vehicles are provided with several different braking means, such as mechanical or electrodynamic brakes. The mechanical brakes are generally pneumatically operated and transform the kinetic energy of the rail vehicle into heat through friction. The electrodynamic brakes transform the kinetic energy of the vehicle into electric energy, which can be dissipated as heat in rheostats (rheostatic braking) or fed back to the power line, e.g. an overhead catenary line or a third rail (regenerative braking). Usually, electrodynamic brakes are provided by the electric motors of the electrically driven rail vehicle, which are used in the alternator mode. Depending on the kind of traction motor used, e.g. DC motors, permanent magnet AC motors or induction motors, the electric machine must be controlled to transfer energy from the rotor to the stator during braking.

Mechanical and electrodynamic brakes are applied jointly or separately for different braking functions, mainly for service braking and for emergency braking.

For service braking, the mechanical brakes and electrodynamic brakes are usually combined. More precisely, the electrodynamic brakes supply the required braking torque up to their full capacity, and are supplemented by the mechanical brakes if necessary, so as to minimize wear and optimize energy regeneration.

On the other hand, electrodynamic brakes are not considered reliable enough to be applied in emergency braking situation. Hence, the whole retarding torque in case of emergency braking is still provided by the mechanical brakes. To provide sufficient performance for emergency braking, the installation of the mechanical brake system requires a number of actuators, which are not permanently used for service braking. This leads to situations where the installed mechanical braking means are oversized and not used on a regular basis. Increased weight, space for installation of voluminous pneumatic equipment and cost are the consequence.

A safety braking system for a vehicle with electric traction is disclosed in US 2009 0224706. The safety braking system comprises a first, electric, non-safety brake which is integrated in the traction chain and includes a three-phase permanent magnet motor capable of operating as a voltage generator, a traction inverter capable of being configured as a diode bridge rectifier, an electromechanical commutator for connecting the permanent magnet motor to the inverter, and a DC link including a chopper brake resistor, a line filter and a line circuit-breaker. The system further includes a second, safety brake. According to one embodiment, the safety brake includes the diode bridge rectifier of the traction inverter, a terminal load resistor, an auxiliary electromechanical relay connected in series with the terminal load resistor and controlled at an input, the relay and the resistor being interposed in parallel between the chopper and the inverter. A current monitoring device is mounted in series on the DC side of the inverter for monitoring the braking performance of the first brake. Upon detection of a predetermined condition, the current monitoring device triggers the electromechanical relay to switch on the branch of the circuit including the load resistor. In order to avoid motoring, the line circuit breaker is also triggered to open the power line.

This system is complex as it involves both an electric non-safety brake and an electric safety brake. Moreover, the design cannot easily be adapted to an induction motor.

Hence, there is a need for an electrodynamic braking system and method that takes full advantage of regenerative braking, i.e. of the braking capacity of the power line, for a track-bound vehicle powered by one or more induction motors.

### SUMMARY OF THE INVENTION

It is an object of the present invention in view of the above mentioned problems to provide an electrodynamic brake system that does not indiscriminately switch off regenerative braking during an emergency brake operation.

According to a first aspect of the invention, there is provided an electrodynamic brake system for a track-bound vehicle comprising the features of claim 1.

Electrodynamic braking, which may include both regenerative braking to the power line and rheostatic braking via a braking chopper resistor, is implemented during emergency braking except in the rare occurrence of a motoring condition. Motoring can be experienced during emergency braking due to a malfunction of the static converter control unit. Whenever motoring is detected during an emergency braking operation, the induction machine is isolated from the DC link.

Preferably, conventional friction brakes are also installed on the vehicle. These friction brakes are dimensioned to provide a fraction of the maximum braking torque in case of emergency, preferably about half of the braking force i.e. the same maximum braking torque as the electrodynamic brakes. In the exceptional case of a malfunction of the static converter control unit, the braking function will be taken over by the friction brakes alone.

According to one embodiment, more than one induction machine is mechanically linkable to one wheel axle and electrically connected to the AC terminals of the static converter.

According to a preferred embodiment, the motoring condition detected by the electrodynamic brake supervision unit is a condition wherein a current between the DC terminals of the static converter and the DC-link flows in the inverter direction during a predetermined time or flows in a direction opposite to the inverter direction with a strength lower than a predetermined threshold during said predetermined time. Accordingly, the electrodynamic brake system includes a DC current sensor in the electric line between the DC link and one of the DC terminals of the static converter.

The predetermined time defines a delay before the static converter is switched off. This delay is built in to take into account transients in the system. Another situation in which a built-in delay may prove useful is a loss of grip between the wheelset and the track during emergency braking. In such a case, the electrodynamic braking power will suddenly decrease to zero, and other components of the system, such as a refluxing unit or a recharging circuit, may result in a transient current in an undesired direction which might unnecessarily trigger the shutting off of the static converter, should no delay be built into the logic of the system.

Preferably, no motoring condition is detected before an initial period of time has lapsed after the emergency braking signal has been activated. The conditions of operation of the drive and brake system just before the emergency brake command are unknown and may lead to transients at the beginning of the emergency brake operation. For instance, the static converter may be providing full traction power when the emergency brake is activated. In such a case, current may still be flowing into the static converter even after the static converter has been switched to the rectifier mode. The predetermined period of time, which may amount to 500 ms or less, ensures that the system has entered a stabilized emergency braking mode before considering tripping the static converter.

The predetermined threshold can be zero, in which case the current detector merely detects a change of direction of the current flowing from the DC link to one of the terminals of the static converter.

To take full advantage of regenerative braking and rheostatic braking, the DC link is connected to the current collector during emergency braking such that the static converter operating in the rectifier mode in response to the emergency braking signals feeds power back both to the DC link (and its braking chopper unit) and to the power line through the DC link and the current collector all the way down to standstill.

The power line can be a DC line or an AC line connected to the DC link via a four-quadrant line converter.

The system can also include a line circuit breaker to isolate the DC link from the power line. In order to prevent a drop of the DC voltage in the DC link after disconnection of the power line and a consecutive loss of magnetic flux in the rotor windings of the induction machine, the DC link may include a capacitor connected in parallel with the DC terminals of the static converter and a recharging unit powered by a battery for charging the capacitor when the DC link is disconnected from the power line.

According to a preferred embodiment, the braking chopper unit includes a resistor in series with a chopper.

According to a preferred embodiment, the static converter control unit controls the static converter such that the electrodynamic brake effort has a predetermined constant value during emergency braking. The electrodynamic brake system may further comprise a weight sensor for measuring a weight load on the driven wheel axle, the static converter control unit being connected to the weight detector such that the predetermined constant value of the electrodynamic brake effort is a function of the weight load on the driven wheel axle.

According to an embodiment, the electrodynamic brake supervision unit controls a restarting unit for restarting the static converter in the rectifier mode after the static converter has been shut off. The restarting unit monitors the current flow and starts a counter when it detects that the DC link voltage becomes too low or the current has become null between the DC-link and the static converter. After a predetermined time, the restarting unit recharges the DC link and the static converter resumes electrodynamic braking. Whenever motoring is detected during a braking operation, the induction machine is isolated from the DC link for a short period of time, which in practice will not exceed a few seconds, after which the restarting strategy allows to resume electrodynamic braking.

According to another aspect of the invention, there is provided a method for electrodynamically braking a track-bound vehicle comprising the features of claim 14.

The motoring condition is preferably a condition wherein a DC current flows from the DC-link into the DC terminals of the static converter in an inverter direction during a predetermined time or flows in a direction opposite to the inverter direction with a strength lower than a predetermined threshold during said predetermined time, wherein the inverter direction is the direction in which electric current flows between the DC link and the static converter when the static converter operates in an inverter mode.

### DESCRIPTION OF THE FIGURES

Illustrative embodiments of the invention will now be described, purely by way of examples and without limitation to the scope of the claims, and with reference to the accompanying drawings, in which:
- Fig. 1 is a schematic diagram of an electrodynamic brake system powered by a DC power line according to a first embodiment of the invention;
- Fig. 2 is a flowchart of an emergency braking method implemented with the electrodynamic brake system of Fig. 1; and
- Fig. 3 is a schematic diagram of an electrodynamic brake system powered by an AC power line according to a second embodiment of the invention.

Corresponding reference numerals refer to the same or corresponding parts in each of the figures.

### DETAILED DESCRIPTION OF PREFERED EMBODIMENTS

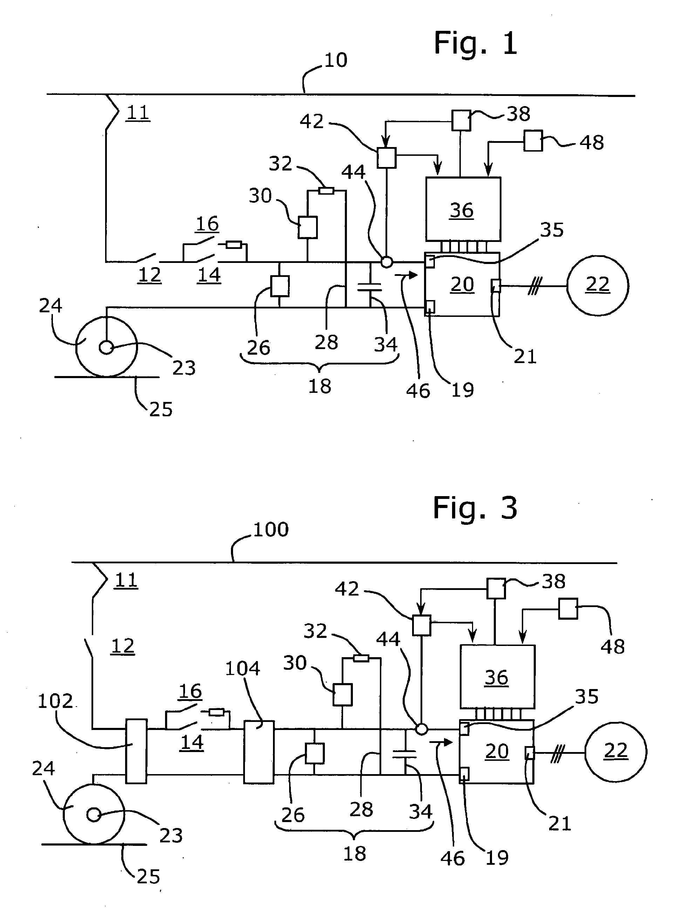

Referring to Figure **1****,** a combined electric drive and brake system for a track-bound vehicle, more specifically a rail vehicle powered by a DC catenary line **10** or a third rail, includes a current collector **11,** a line circuit breaker **12** and a separation contactor **14** connected in parallel with a charging contactor and resistor unit **16.** The electric drive and brake system further comprises a DC link **18** connected to DC terminals **19** of a static converter **20** for converting the DC current of the DC link into a three-phase alternative current. The static converter **20** has its AC terminals **21** connected to an induction machine **22** mechanically linked to a wheel axle **23** of the track-bound vehicle. The wheel axle **23** is also equipped with a conventional friction brake (not shown). The steel wheels **24** of the wheel axle **23** close the electric circuit and allow the current to flow back to the feeder station via the track **25** connected to the earth.

The DC link **18** includes a refluxing unit **26** connected in parallel with the static converter **20,** a braking chopper unit **28** including a braking chopper **30** and a braking chopper resistance **32** connected in parallel with the static converter, and a DC link capacitor **34** connected in parallel with the braking chopper unit **28** and with the DC terminals **19** of the static converter **20.**

The static converter **20** is controlled by a static converter control unit **36** and can be operated alternatively in an inverter mode for powering the induction machine **22** and in a rectifier mode for feeding back energy from the induction machine **22** to the DC link **18.** The static converter control unit **36** receives inputs from emergency brake commands **38,** e.g. a binary input connected to an emergency brake loop, a brake pipe or an emergency pushbutton. The static converter control unit **36** also receives a shut down signal from an electrodynamic brake supervision unit **42,** which includes a DC current sensor **44** for monitoring the current flowing from the DC link to one of the terminals of the static converter **20.**

When the static converter **20** operates in the inverter mode and the induction machine **22** runs as induction motor to propel the vehicle, the electric current flows between the DC link **18** and the DC terminals **19** of the static converter **20** in a given direction **46,** which will be designated the inverter direction and will be considered arbitrarily as a positive current. When the static converter **20** operates in the rectifier mode and the induction machine **22** runs as alternator to bring about electrodynamic braking, the electric current should normally flow between the DC link **18** and the DC terminals **19** of the static converter **20** in the direction opposed to the inverter direction **46** and have a negative value.

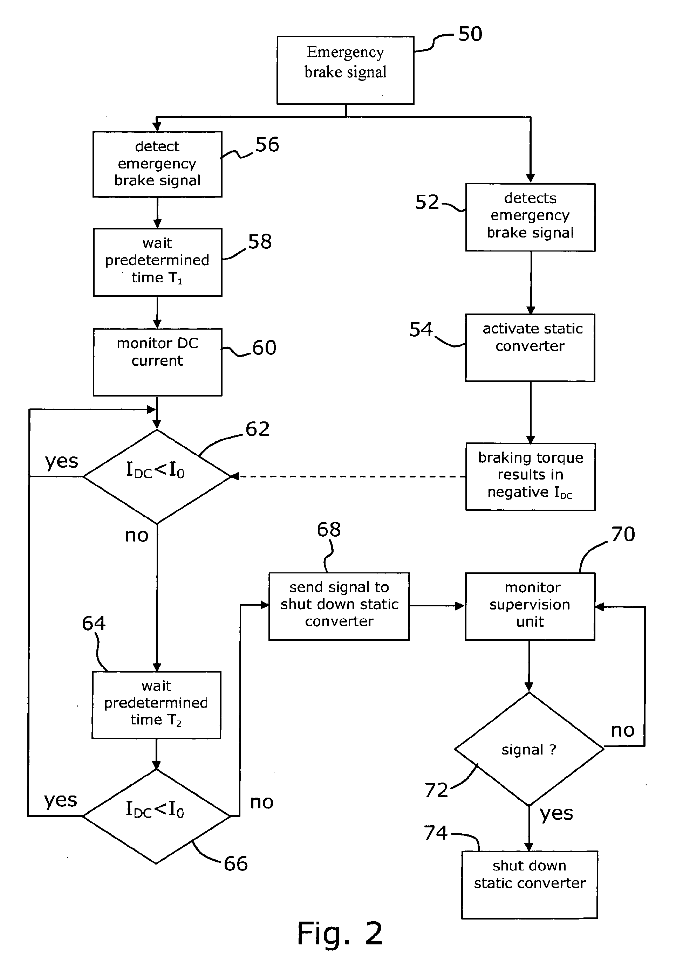

The operation of the system in an emergency braking mode will now be described with reference to the flowchart of Figure **2****.** When an emergency brake signal is received from the emergency brake command **38** (step **50** in Figure **2**), the static converter control unit **36** detects the emergency brake signal (step **52**) and operates the static converter **20** in the rectifier mode such that the induction machine **22** runs as alternator to deliver power through the static converter **20** to the DC link **18** (step **54**). The DC voltage of the static converter **20** is controlled via the static converter control unit **36** to reach and maintain the internal electrodynamic brake effort set point. In practice, this set point is a function of the weight, i.e. vertical load on the wheel axle **23** measured by a weight sensor **48.** The set point is preferably constant throughout the emergency braking operation from the starting speed down to a low speed threshold, e.g. 5 km/h or down to standstill. The set point is preferably determined from the electrodynamic brake effort available at maximum operational speed which is then maintained for all speeds during emergency braking..

The electromotive force at the DC terminals **19** of the static converter **20** is such that a current flows through the static converter terminals **19** in the direction opposite to the inverter direction **46** back to the DC power line **10** to bring about regenerative braking. The braking chopper **30** can be either switched off, such that no power is dissipated in the braking chopper resistor **32**, or activated to ensure that part of the electric energy is dissipated in the braking chopper resistor **32.**

The electrodynamic brake supervision unit **42** detects the emergency braking signal from the energy brake command **38** (step **56**). After a first predetermined period of time **T₁** (step **58**), the electrodynamic brake supervision unit **42** starts monitoring the current flow from the DC link **18** towards the static converter **20** (step **60**). As long as the current flows in the direction opposite to the inverter direction and is less than a predetermined negative threshold **I₀,** electrodynamic braking is allowed. If the current in the direction opposite to the inverter direction becomes higher than the predetermined threshold **I₀** or if the current flow changes direction (step **62**) to become positive, the supervision unit counts down time until a second predetermined period of time **T₂** has lapsed (step **64**). If at the end of the second period of time **T₂** the current flow is still in the inverter direction or is still lower than the predetermined threshold **I₀** in the direction opposite to the inverter direction (step **66**), the supervision unit **42** sends a signal to the static converter control unit to shut off the static converter firing pulses (step **68**). The static converter control unit **36**, which continuously monitors the input from the supervision unit **42** (step **70**) detects the signal from the electrodynamic brake supervision unit **42** (step **72**) and turns off the firing pulses triggering the IGBT's of the static converter **20** (step **74**) to isolate the induction machine and avoid motoring.

The first period of time **T₁** is there to ensure that the emergency braking operation has stabilized and that possible transient currents appearing at an early stage of the emergency braking operation when the static converter switches from the inverter mode to the rectifier mode have faded away. The second period of time **T₂** is built into the system to avoid switching off the electrodynamic braking if a temporary loss of grip of the wheels on the track is experienced during the emergency braking procedure. **T₂ should** be smaller than **T₁.**

It is to be understood that the invention is not intended to be restricted to the details of the above embodiments, which are described by way of example only. In particular, the static converter **20** can be switched off without delay as soon as a current below the predetermined threshold or in the inverter direction is detected. In such a case, the steps **64, 66** of the method relative to the counting down of the second period of time **T₂** can be omitted. The current strength threshold **I₀** in the direction opposite to the inverter direction can be equal to zero, in which case the condition relative to the current is simply that the current flows in the inverter direction.

A second embodiment of the invention is illustrated in Figure **3****.** This embodiment differs from the first embodiment by the fact that the combined drive and brake system is powered by an AC catenary line **100** or a third rail, through a main transformer **102** and a AC-DC line converter **104.** The line circuit breaker **12** is located on the primary side of the main transformer **102.** The separation contactor **14,** charging contactor and resistor **16** are preferably located between the secondary winding of the main transformer **102** and the AC-DC line converter **104.** The DC link **18,** static converter **20** and induction machine **22** mechanically linked to a wheel axle **23** of the track-bound vehicle remain unchanged.

## Claims

1. An electrodynamic brake system for a track-bound vehicle powered by a power line (10, 100) comprising:
- a current collector (11) for connecting the electrodynamic brake system to the power line (10, 100);
- a DC link (18) provided with a braking chopper unit (28), the DC link (18) being powered by the power line (10, 100) through the current collector (11);
- a static converter (20) having DC terminals (19) connected to the DC link (18) and AC terminals (21), the static converter being operable in a rectifier mode to transfer power from the AC terminals (21) to the DC terminals (19) and an inverter mode to transfer power from the DC terminals (19) to the AC terminals (21), wherein electric current flows from the DC link (18) to the DC terminals (19) of the static converter (18) in an inverter direction when the static converter (18) operates in the inverter mode;
- at least one induction machine (22) operable in a motor mode and a generative mode, the induction machine being mechanically linkable to a wheel axle (23) and electrically connected to the AC terminals of the static converter (20);
- a static converter control unit (36) for controlling the static converter (20) such that the static converter (20) operates in the rectifier mode and the induction machine (22) operates in the generative mode to feed power back to the DC link (18) in response to an emergency braking signal,
**characterised in that** the electrodynamic brake system further comprises an electrodynamic brake supervision unit (42) for shutting off the static converter (20) to reduce the current flowing between the AC terminals (21) of the static converter and the induction machine (22) and demagnetise the induction machine (22) upon detection of a motoring condition during emergency braking, wherein the motoring condition is detected by the electrodynamic brake supervision unit (42) which includes a DC current sensor (44) in the electric line between the DC link (18) and one of the DC terminals (19) of the static converter (20).

2. The electrodynamic brake system of claim 1, **characterized in that** the motoring condition is a condition wherein a DC current flows from the DC-link (18) into the DC terminals (19) of the static converter (20) in the inverter direction (46) during a predetermined time (T₁) or flows in a direction opposite to the inverter direction (46) with a strength lower than a predetermined threshold during said predetermined time.

3. The electrodynamic brake system of claim 2, **characterized in that** no motoring condition is detected before an initial period of time (T₁) has lapsed after the emergency braking signal has been activated.

4. The electrodynamic brake system of claim 2 or claim 3, **characterized in that** the predetermined threshold (lo) is zero.

5. The electrodynamic brake system of any one of claims 1 to 4, **characterised in that** the DC link (18) is connected to the current collector (11) during emergency braking such that the static converter (20) operating in the rectifier mode in response to the emergency braking signal (38) feeds power back to the power line (10, 100) through the DC link (18) and the current collector (11) all the way down to standstill.

6. The electrodynamic brake system of any one of claims 1 to 5, **characterised in that** the power line is a DC line (10).

7. The electrodynamic brake system of any one of claims 1 to 5, **characterised in that** the power line is an AC line (100) connected to the DC link (18) via a four-quadrant line converter (104).

8. The electrodynamic brake system of any one of the preceding claims, **characterised in that** the DC link (18) includes a capacitor (34) connected in parallel with the DC terminals (19) of the static converter (20) and a recharging unit (26) powered by a battery for charging the capacitor (10).

9. The electrodynamic brake system of any one of the preceding claims, **characterised in that** the brake chopper unit (28) includes a resistor (32) in series with a chopper (30).

10. The electrodynamic brake system of any one of the preceding claims, **characterised in that** the static converter control unit (36) controls the static converter (20) such that the electrodynamic brake effort has a predetermined constant value during emergency braking.

11. The electrodynamic brake system of claim 10, **characterised in that** it further comprises a weight sensor (48) for measuring a weight load on the driven wheel axle (23), the static converter control unit (36) being connected to the weight sensor (48) such that the predetermined constant value of the electrodynamic brake effort is a function of the weight load on the driven wheel axle.

12. The electrodynamic brake system of any one of the preceding claims, **characterised in that** the electrodynamic brake supervision unit (42) controls a restarting unit for restarting the static converter in the rectifier mode after the static converter has been shut off.

13. A wheelset for a track-bound vehicle provided with the electrodynamic brake system of any one of the preceding claims, **characterised in that** the wheelset includes a wheel axle (23) linked to the induction machine (22) and to a friction brake.

14. A method for electrodynamically braking a track-bound vehicle, including:
- operating an induction machine (22) mechanically linked to a wheel axle (23) of the rail vehicle in an generative mode;
- operating a static converter (20) connected between a DC link (18) and the induction machine (22) in a rectifier mode;
- monitoring a motoring condition of the induction machine (22) with an electrodynamic brake supervision unit (42) including a DC current sensor (44) in an electric line between the DC link (18) and a DC terminal (19) of the static converter (20) ;
- upon detection of the motoring condition, shutting off the static converter (20).

15. The method of claim 14, **characterized in that** the motoring condition is a condition wherein a DC current flows from DC-link into the DC terminals (19) of the static converter (20) in an inverter direction during a predetermined time or flows in a direction opposite to the inverter direction with a strength lower than a predetermined threshold during said predetermined time, wherein the inverter direction is the direction in which electric current flows between the DC link (18) and the static converter (20) when the static converter (20) operates in an inverter mode.

## Patentansprüche

1. Elektrodynamisches Bremssystem für ein spurgebundenes Fahrzeug, das von einer Stromleitung (10, 100) gespeist wird, umfassend:
- einen Stromabnehmer (11) zum Verbinden des elektrodynamischen Bremssystems mit der Stromleitung (10, 100);
- eine DC-Verbindung (18), die mit einer Bremschoppereinheit (28) versehen ist, wobei die DC-Verbindung (18) von der Stromleitung (10, 100) über den Stromabnehmer (11) gespeist wird;
- einen statischen Umformer (20) mit DC-Anschlüssen (19), die mit der DC-Verbindung (18) verbunden sind, und mit AC-Anschlüssen (21), wobei der statische Umformer in einem Gleichrichtermodus betreibbar ist, um Strom von den AC-Anschlüssen (21) zu den DC-Anschlüssen (19) zu übertragen, und in einem Wechselrichtermodus betreibbar ist, um Strom von den DC-Anschlüssen (19) zu den AC-Anschlüssen (21) zu übertragen, wobei elektrischer Strom von der DC-Verbindung (18) zu den DC-Anschlüssen (19) des statischen Umformers (18) in eine Wechsehichterrichtung fließt, wenn der statische Umformer (18) im Wechselrichtermodus arbeitet;
- zumindest eine Induktionsmaschine (22), die in einem Motormodus und einem Erzeugungsmodus betreibbar ist, wobei die Induktionsmaschine mechanisch mit einer Radachse (23) verbindbar ist und elektrisch mit den AC-Anschlüssen des statischen Umformers (20) verbunden ist;
- eine Steuereinheit (36) für einen statischen Umformer, um den statischen Umformer (20) so zu steuern, dass der statische Umformer (20) im Gleichrichtermodus arbeitet und die Induktionsmaschine (22) im Erzeugungsmodus arbeitet, um Strom in Antwort auf ein Notbremssignal zurück zur DC-Verbindung (18) zu speisen,
**dadurch gekennzeichnet, dass** das elektrodynamische Bremssystem darüber hinaus eine elektrodynamische Bremsüberwachungseinheit (42) umfasst, um den statischen Umformer (20) abzuschalten, so dass der zwischen den AC-Anschlüssen (21) des statischen Umformers und der Induktionsmaschine (22) fließende Strom verringert wird und die Induktionsmaschine bei Erkennen eines Antriebszustands während einer Notbremsung zu entmagnetisieren, wobei der Antriebszustand von der elektrodynamischen Bremsüberwachungseinheit (42) erkannt wird, die einen DC-Stromsensor (44) in der elektrischen Leitung zwischen der DC-Verbindung (18) und einem der DC-Anschlüsse (19) des statischen Umformers (20) enthält.

2. Elektrodynamisches Bremssystem nach Anspruch 1, **dadurch gekennzeichnet, dass** der Antriebszustand ein Zustand ist, wobei ein DC-Strom während eines vorab festgelegten Zeitraums (T₁) von der DC-Verbindung (18) in die DC-Anschlüsse (19) des statischen Umformers (20) in die Wechselrichterrichtung (46) fließt oder mit einer Stärke unter einem vorab festgelegten Schwellenwert während des vorab festgelegten Zeitraums in eine Richtung fließt, die der Wechselrichterrichtung (46) entgegengesetzt ist,

3. Elektrodynamisches Bremssystem nach Anspruch 2, **dadurch gekennzeichnet, dass** kein Antriebszustand erkannt wird, bevor ein Anfangszeitraum (T₁) verstrichen ist, nachdem das Notbremssignal aktiviert wurde.

4. Elektrodynamisches Bremssystem nach Anspruch 2 oder 3, **dadurch gekennzeichnet, dass** der vorab festgelegte Schwellenwert (I₀) null ist.

5. Elektrodynamisches Bremssystem nach einem der Ansprüche 1 bis 4, **dadurch gekennzeichnet, dass** die DC-Verbindung (18) während einer Notbremsung mit dem Stromabnehmer (11) verbunden ist, so dass der statische Umformer (20), der in Antwort auf das Notbremssignal (38) im Gleichrichtermodus arbeitet, Strom über die DC-Verbindung (18) und den Stromabnehmer (11) bis hin zum Stillstand zurück zur Stromleitung (10, 100) speist.

6. Elektrodynamisches Bremssystem nach einem der Ansprüche 1 bis 5, **dadurch gekennzeichnet, dass** die Stromleitung eine DC-Leitung (10) ist.

7. Elektrodynamisches Bremssystem nach einem der Ansprüche 1 bis 5, **dadurch gekennzeichnet, dass** die Stromleitung eine AC-Leitung (100) ist, die über einen 4-Quadranten-Netzumrichter (104) mit der DC-Verbindung (18) verbunden ist.

8. Elektrodynamisches Bremssystem nach einem der vorstehenden Ansprüche, **dadurch gekennzeichnet, dass** die DC-Verbindung (18) einen Kondensator (34), der parallel mit den DC-Anschlüssen (19) des statischen Umformers (20) verbunden ist, und eine Wiederaufladeeinheit (26) enthält, die von einer Batterie gespeist wird, um den Kondensator (10) zu laden.

9. Elektrodynamisches Bremssystem nach einem der vorstehenden Ansprüche, **dadurch gekennzeichnet, dass** die Bremschoppereinheit (28) einen Widerstand (32) in Reihe mit einem Chopper (30) enthält.

10. Elektrodynamisches Bremssystem nach einem der vorstehenden Ansprüche, **dadurch gekennzeichnet, dass** die Steuereinheit (36) für einen statischen Umformer den statischen Umformer (20) so steuert, dass die elektrodynamische Bremsleistung während einer Notbremsung einen vorab festgelegten konstanten Wert hat.

11. Elektrodynamisches Bremssystem nach Anspruch 10, **dadurch gekennzeichnet, dass** es darüber hinaus einen Gewichtssensor (48) zum Messen einer Gewichtslast auf der angetriebenen Radachse (23) umfasst, wobei die Steuereinheit (36) für einen statischen Umformer mit dem Gewichtssensor (48) verbunden ist, so dass der vorab festgelegte konstante Werte der elektrodynamischen Bremsleistung eine Funktion der Gewichtslast auf der angetriebenen Radachse ist.

12. Elektrodynamisches Bremssystem nach einem der vorstehenden Ansprüche, **dadurch gekennzeichnet, dass** die elektrodynamische Bremsüberwachungseinheit (42) eine Neustarteinheit zum Neustarten des statischen Umformers im Gleichrichtermodus umfasst, nachdem der statische Umformer abgeschaltet wurde.

13. Radsatz für ein spurgebundenes Fahrzeug, das mit einem elektrodynamischen Bremssystem nach einem der vorstehenden Ansprüche bereitgestellt ist, **dadurch gekennzeichnet, dass** der Radsatz eine Radachse (23) enthält, die mit der Induktionsmaschine (22) und einer Reibungsbremse verbunden ist.

14. Verfahren zum elektrodynamischen Bremsen eines spurgebundenen Fahrzeugs, das beinhaltet:
- Betreiben einer Induktionsmaschine (22), die mechanisch mit einer Radachse (23) des Schienenfahrzeugs verbunden ist, in einem Erzeugungsmodus;
- Betreiben eines statischen Umformers (20), der zwischen einer DC-Verbindung (18) und der Induktionsmaschine (22) verbunden ist, in einem Gleichrichtermodus;
- Überwachen eines Antriebszustands der Induktionsmaschine (22) mit einer elektrodynamischen Bremsüberwachungseinheit (42), die einen DC-Stromsensor (44) in einer elektrischen Leitung zwischen der DC-Verbindung (18) und einem DC-Anschluss (19) des statischen Umformers (20) enthält;
- bei Erkennen des Antriebszustands Abschalten des statischen Umformers (20).

15. Verfahren nach Anspruch 14, **dadurch gekennzeichnet, dass** der Antriebszustand ein Zustand ist, wobei ein DC-Strom während eines vorab festgelegten Zeitraums von einer DC-Verbindung in die DC-Anschlüsse (19) des statischen Umformers (20) in einer Wechselrichteruchtung fließt oder mit einer Stärke unter einem vorab festgelegten Schwellenwert während des vorab festgelegten Zeitraums in eine Richtung fließt, die der Wechsehichterrichtung entgegengesetzt ist, wobei die Wechselrichteruchtung die Richtung ist, in der elektrischer Strom zwischen der DC-Verbindung (18) und dem statischen Umformer (20) fließt, wenn der statische Umformer (20) in einem Wechsehichtermodus arbeitet.

## Revendications

1. Système de freinage électrodynamique pour un véhicule ferroviaire alimenté par une ligne de puissance (10, 100) comprenant :
- un collecteur de courant (11) pour connecter le système de freinage électrodynamique à la ligne de puissance (10, 100);
- une liaison de courant continu (18) pourvue d'une unité de hacheur de freinage (28), la liaison de courant continu (18) étant alimentée par la ligne de puissance (10, 100) par l'intermédiaire du collecteur de courant (11) ;
- un convertisseur statique (20) comportant des bornes de courant continu (19) connectées à la liaison de courant continu (18) et des bornes de courant alternatif (21), le convertisseur statique pouvant fonctionner dans un mode de redresseur pour transférer une puissance des bornes de courant alternatif (21) aux bornes de courant continu (19) et un mode d'onduleur pour transférer une puissance des bornes de courant continu (19) aux bornes de courant alternatif (21), dans lequel un courant électrique circule de la liaison de courant continu (18) aux bornes de courant continu (19) du convertisseur statique (18) dans une direction d'onduleur lorsque le convertisseur statique (18) fonctionne dans le mode d'onduleur ;
- au moins une machine asynchrone (22) pouvant être utilisée dans un mode de moteur et dans un mode de génération, la machine asynchrone pouvant être liée mécaniquement à un essieu de roue (23) et connectée électriquement aux bornes de courant alternatif du convertisseur statique (20) ;
- une unité de commande de convertisseur statique (36) pour commander le convertisseur statique (20) de sorte que le convertisseur statique (20) fonctionne dans le mode de redresseur et que la machine asynchrone (22) fonctionne dans le mode de génération pour fournir une puissance en retour à la liaison de courant continu (18) en réponse à un signal de freinage d'urgence,
**caractérisé en ce que** le système de freinage électrodynamique comprend en outre une unité de supervision de freinage électrodynamique (42) pour arrêter le convertisseur statique (20) pour réduire le courant circulant entre les bornes de courant alternatif (21) du convertisseur statique et la machine asynchrone (22) et démagnétiser la machine asynchrone (22) lors de la détection d'une condition d'entraînement pendant un freinage d'urgence, dans lequel la condition d'entraînement est détectée par l'unité de supervision de freinage électrodynamique (42) qui comprend un capteur de courant continu (44) dans la ligne électrique entre la liaison de courant continu (18) et l'une des bornes de courant continu (19) du convertisseur statique (20).

2. Système de freinage électrodynamique selon la revendication 1, **caractérisé en ce que** la condition d'entraînement est une condition dans laquelle un courant continu circule de la liaison de courant continu (18) dans les bornes de courant continu (19) du convertisseur statique (20) dans la direction d'onduleur (46) pendant un temps prédéterminé (T₁) ou circule dans une direction opposée à la direction d'onduleur (46) avec une intensité inférieure à un seuil prédéterminé pendant ledit temps prédéterminé.

3. Système de freinage électrodynamique selon la revendication 2, **caractérisé en ce qu'**aucune condition d'entraînement n'est détectée avant qu'une période de temps initiale (T₁) se soit écoulée après que le signal de freinage d'urgence a été activé.

4. Système de freinage électrodynamique selon la revendication 2 ou la revendication 3, **caractérisé en ce que** le seuil prédéterminé (I₀) est zéro.

5. Système de freinage électrodynamique selon l'une quelconque des revendications 1 à 4, **caractérisé en ce que** la liaison de courant continu (18) est connectée au collecteur de courant (11) pendant un freinage d'urgence de sorte que le convertisseur statique (20) fonctionnant dans le mode de redresseur en réponse au signal de freinage d'urgence (38) fournisse une puissance en retour à la ligne de puissance (10, 100) par l'intermédiaire de la liaison de courant continu (18) et du collecteur de courant (11) en permanence jusqu'à l'arrêt.

6. Système de freinage électrodynamique selon l'une quelconque des revendications 1 à 5, **caractérisé en ce que** la ligne de puissance est une ligne de courant continu (10).

7. Système de freinage électrodynamique selon l'une quelconque des revendications 1 à 5, **caractérisé en ce que** la ligne de puissance est une ligne de courant alternatif (100) connectée à la liaison de courant continu (18) par l'intermédiaire d'un convertisseur de ligne quatre quadrants (104).

8. Système de freinage électrodynamique selon l'une quelconque des revendications précédentes, **caractérisé en ce que** la liaison de courant continu (18) comprend un condensateur (34) connecté en parallèle avec les bornes de courant continu (19) du convertisseur statique (20) et une unité de recharge (26) alimentée par une batterie pour charger le condensateur (10).

9. Système de freinage électrodynamique selon l'une quelconque des revendications précédentes, **caractérisé en ce que** l'unité de hacheur de freinage (28) comprend une résistance (32) en série avec un hacheur (30).

10. Système de freinage électrodynamique selon l'une quelconque des revendications précédentes, **caractérisé en ce que** l'unité de commande de convertisseur statique (36) commande le convertisseur statique (20) de sorte que l'effort de freinage électrodynamique ait une valeur constante prédéterminée pendant le freinage d'urgence.

11. Système de freinage électrodynamique selon la revendication 10, **caractérisé en ce qu'**il comprend en outre un capteur de poids (48) pour mesurer une charge de poids sur l'essieu de roue entraînée (23), l'unité de commande de convertisseur statique (36) étant connectée au capteur de poids (48) de sorte que la valeur constante prédéterminée de l'effort de freinage électrodynamique soit fonction de la charge de poids sur l'essieu de roue entraînée.

12. Système de freinage électrodynamique selon l'une quelconque des revendications précédentes, **caractérisé en ce que** l'unité de supervision de freinage électrodynamique (42) commande une unité de redémarrage pour redémarrer le convertisseur statique dans le mode de redresseur après que le convertisseur statique a été arrêté.

13. Train de roues pour un véhicule ferroviaire pourvu du système de freinage électrodynamique selon l'une quelconque des revendications précédentes, **caractérisé en ce que** le train de roues comprend un essieu de roue (23) lié à la machine asynchrone (22) et à un frein à friction.

14. Procédé pour freiner de manière électrodynamique un véhicule ferroviaire, comprenant :
- le fonctionnement d'une machine asynchrone (22) liée mécaniquement à un essieu de roue (23) du véhicule ferroviaire dans un mode de génération ;
- le fonctionnement d'un convertisseur statique (20) connecté entre une liaison de courant continu (18) et la machine asynchrone (22) dans un mode de redresseur ;
- la surveillance d'une condition d'entraînement de la machine asynchrone (22) avec une unité de supervision de freinage électrodynamique (42) comprenant un capteur de courant continu (44) dans une ligne électrique entre la liaison de courant continu (18) et une borne de courant continu (19) du convertisseur statique (20) ;
- lors de la détection de la condition d'entraînement, l'arrêt du convertisseur statique (20).

15. Procédé selon la revendication 14, **caractérisé en ce que** la condition d'entraînement est une condition dans laquelle un courant continu circule de la liaison de courant continu dans les bornes de courant continu (19) du convertisseur statique (20) dans une direction d'onduleur pendant un temps prédéterminé ou circule dans une direction opposée à la direction d'onduleur avec une intensité inférieure à un seuil prédéterminé pendant ledit temps prédéterminé, dans lequel la direction d'onduleur est la direction dans laquelle un courant électrique circule entre la liaison de courant continu (18) et le convertisseur statique (20) lorsque le convertisseur statique (20) fonctionne dans un mode d'onduleur.
